# EUROPEAN PATENT SPECIFICATION

(11) **EP 1 978 001 B1**
(45) Date of publication and mention of the grant of the patent: **11.05.2011**
(21) Application number: 08005072.7
(22) Date of filing: 18.03.2008
(51) Int. Cl.: C03B 23/207, C03B 37/012, C03B 37/027

(54) **Method for welding together a primary preform and a silica bar**
Verfahren zum Zusammenschweißen einer ersten Vorform und einer Kieselsäurestange
Procédé de soudage d'une préforme primaire et d'une barre de silicium

(30) Priority: 27.03.2007 FR 0702222
(43) Date of publication of application: 08.10.2008
(73) Proprietor: Draka Comteq B.V., 1083 HJ Amsterdam (NL)
(72) Inventor: Cuvelier, Gaetan, 95100 Argenteuil (FR); Jardy, Laurent, 95100 Argenteuil (FR); Petifrère, Emmanuel, 59650 Villeneuve D'Ascq (FR)
(74) Representative: op den Brouw-Sprakel, Vera Stefanie Irene

(56) References cited:
- EP-A- 1 454 889
- EP-A- 1 690 836
- DE-C- 912 622
- JP-A- 57 111 255
- US-A- 4 407 667
- US-A1- 2003 019 245
- US-B1- 6 178 779
- US-B1- 6 305 195

## Description

The present invention relates to a method for welding together one end of a primary preform and one end of a silica bar having different properties, during the manufacturing an optical fiber preform.

An optical fiber is made by drawing a preform on a drawing tower. A preform generally comprises a primary preform consisting of a silica tube in pure or doped silica in which doped and/or pure silica layers have successively been deposited to form an inner cladding and a central optical core of the optical fiber. This primary preform is then overcladded or sleeved to increase its diameter and to form a final preform which can be used on a drawing tower. In this context, the term inner cladding is used for the optical cladding formed inside the silica tube, and outer cladding for the optical cladding formed on the outside of the silica tube. The homothetic optical fiber drawing operation consists of placing the preform vertically in a tower and drawing an optical fiber strand from one end of the preform. For this purpose, a high temperature is locally applied to one end of the preform until the silica softens, the optical fiber drawing speed and temperature then being permanently controlled during the drawing operation, since they determine the diameter of the optical fiber.

An optical fiber conventionally consists of an optical core whose function is to transmit and optionally amplify an optical signal, and of an optical cladding whose function is to confine the optical signal within the optical core. For this purpose, the refractive indexes of the optical core n_{c} and the optical cladding n_{g} are such that n_{c}>n_{g}. As is well known, the propagation of an optical signal in a single mode optical fiber decomposes into a fundamental mode guided in the optical core, and into secondary modes also called cladding modes guided over a certain distance in the optical core-optical cladding assembly.

Such a silica tube may be made for example according to the method described in the document US 3,907,536. The depositions in the tube can be of the chemical vapour deposition type, designated by the acronym CVD. This type of deposition is performed by injecting gas mixtures in the tube and by ionizing said mixtures. The CVD type deposition encompasses modified chemical vapour depositions (MCVD), furnace chemical vapour depositions (FCVD) and plasma enhanced chemical vapour depositions (PCVD). The PCVD deposition in the tube is for example described in US 4,145,456.

After depositing the layers corresponding to the optical core and to the inner cladding, the silica tube is closed on itself in a so called collapsing operation. The primary preform consisting of a silica rod is then obtained. This primary preform is then overcladded to increase the diameter, generally with natural silica grains for reasons of costs.

US 2003/0019245 discloses a method of purifying silica and depositing said silica on an optical fiber preform. The overcladding may be carried out by plasma deposition in which the natural silica grains are projected on the primary preform and fused with a plasma torch under a temperature of the order of 2,300° so as to be vitrified on the periphery of the primary preform to form an outer optical cladding. The primary preform is caused to rotate around its longitudinal axis and the plasma torch or the primary preform or both move(s) longitudinally with respect to each other in order to provide a uniform silica deposit on the whole periphery of the primary preform.

It is required that the primary preform is connected or fixed to an overcladding device, such as a glass working lathe, and allow it to rotate around its longitudinal axis. Normally this connection is carried out by the welding of the ends of the primary preform to for example silica bars held in position in the overcladding device. The overcladding operation is generally carried out in a closed cabin with a controlled atmosphere so as to provide protection against electromagnetic perturbations and the evolvement of ozone emitted by the plasma torch.

JP 57111255 discloses the welding of a colored quartz disc coaxially between two quartz preform rods to form a discriminative layer in order to detect the connected part of preform rods during drawing of optical fibers.

US 6,178,779 discloses a method of assembling two optical fiber preforms together end-to-end by means of heating the ends of the preforms to be connected and pressing the heated ends into contact.

DE 912 622 discloses a method of assembling two glass rods having different melting points by using intermediate pieces of glass.

US 4,407,667 discloses a continuous process of manufacturing optical fibers by inserting preforms one after the other in a drawing tower and welding them end-to-end in a welding station.

US 6,305,195 discloses isothermal plasma torch techniques for welding preforms end-to-end.

EP 1 690 836 discloses a method for connecting optical fiber preforms by bringing the ends close together and heating both ends and connecting them.

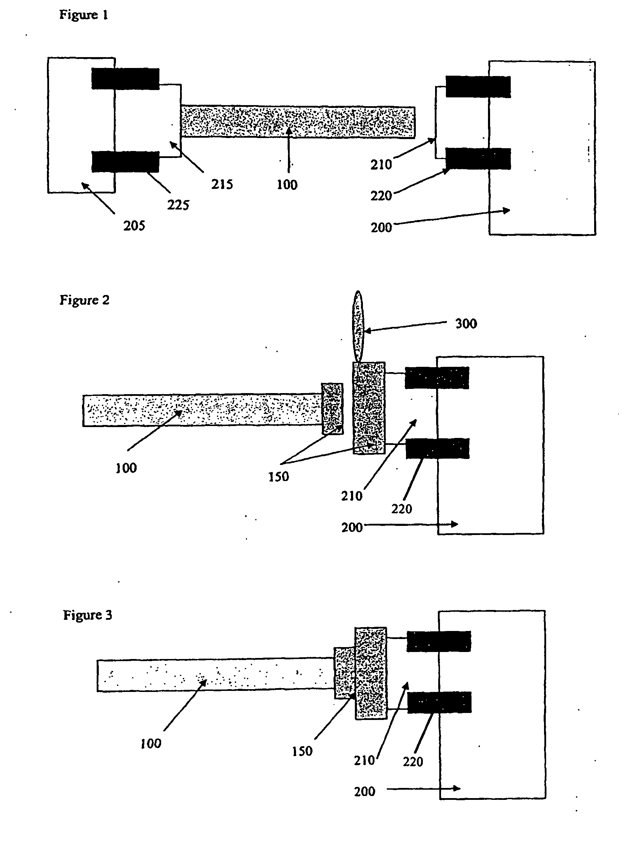

Fig. 1 shows a classic installation for overcladding an optical fiber preform. A primary preform 100 is brought with a first end welded to a first silica bar 215 held on a first glass working lathe support 205 by chucks 225. This first end of the preform 100 was welded by hand to the silica bar 215 with a H₂/O₂ blow torch, for example. Such blow torch welding operation is quite long to perform because it is done by hand by an operator and it should be carried out under an exhaust hood in order to satisfy the safety regulations because of the high heat of the blow torch. The primary preform 100 should then be placed on a glass working lathe which comprises another silica bar 210 held on a glass working lathe support 200 fixed by chucks 220. A mandrel is provided to drive the silica bar 210 into rotation so as to cause the primary preform 100 to rotate around its longitudinal axis.

The silica used for the silica bars 210, 215 for attaching the preform 100 is low cost non-doped silica, and often containing impurities such as dust particles or water. On the other hand, the silica of the silica rod of the primary preform 100 may be doped, and even highly doped when the preform is intended to produce monomode optical fibers or for chromatic dispersion compensating optical fibers. The difference in doping between the silica of the preform 100 and the silica of the silica bars 210, 215 causes notable differences between both materials, notably in terms of viscosity and thermal expansion. In this context, the welding of the primary preform 100 to the supporting silica bars 210, 215 of the glass working lathe support 200, 205 is delicate. The first end of the primary preform 100 is delicately welded to the first silica bar 215 with a blow torch. With slow and gradual heating, it is possible to produce a solid weld but this operation is costly in time and in productivity. It is therefore advantageous to use the plasma torch available in the overcladding installation for welding the second end of the primary preform 100 to the second supporting silica bar 210. The first end needs to be welded by hand in order to attach the primary preform 100 to the glass working lathe support 200. It should be understood that it would also be possible to use the overcladding installation to weld both ends of the primary preform 100 to first and second silica bars 210, 215 if means are available to hold the primary preform in place during formation of the first weld. The use of a hand held torch causes sudden heating or cooling of the silica when said burner is targeted at or taken away from the area where the weld is made. This sudden heating or cooling enhances the difference in thermal behaviour, i.e. difference in expansion or shrinkage between the two materials that are welded, making the weld of the second end of the primary preform 100 to the second bar 215 of low quality, i.e. brittle. In addition, during the welding process both the end of the primary preform 100 and the end of the silica bars 210, 215 are heated and softened and contaminations that are present in the silica bars 210, 215 as mentioned before may diffuse into the end of the primary preform 100. This diffusion of contaminants is the reason that after welding the end of the primary preform 100 is no longer of the same composition as before the welding. Therefore, the outer end that is welded can no longer be used for fiber drawing. So a part of the primary preform 100 is lost for fiber drawing using this process.

Methods for welding together optical fiber preforms in which both of the preforms to be welded end-to-end are generally of the same nature, i.e., intended for drawing a same optical fiber, and each consisting of silica containing substantially the same concentrations of dopants, are known.

US-A-6 178 779 describes a method for assembling end-to-end two optical fiber preforms. Both preforms are mounted on a glass working lathe in a longitudinal alignment and set into rotation; a burner heats both ends to be assembled in an axial reciprocal movement in order to heat each end uniformly. Both heated ends of the preforms are then brought closer together and welded.

US-A-6 098 429 describes an optical fiber-drawing method in which the optical fiber preforms are drawn continuously. Preforms are welded end-to-end in the drawing tower by a servo-controlled laser in order to displace the laser at the same time as the preforms in the tower so as to reduce the area affected by the welding.

Such welds of optical fiber preforms 100 are carried out on silica bars 210, 215 having substantially the same properties in terms of viscosity and thermal expansion as the thereby welded preforms 100 have the same concentrations of dopants since they are intended for drawing a same optical fiber. The weld is therefore generally clean and solid.

On the other hand, when welding silica bars 210, 215 having very different properties, for example in the case of welding a primary preform 100, often containing dopants in various concentrations, with a supporting silica bar 210, 215 of a glass working lathe support 200, 205 which is in non-doped silica and often strongly contaminated, the property differences of the materials to be welded cause an embrittlement of the weld and breakages are common causing the fall and destruction of the very costly primary preform 100. Such a situation may also be encountered in the case of a weld of two preforms with very different dopant concentrations, for example the weld of a highly doped preform with a slightly doped preform.

Therefore, there is a need for a method for welding together one end of a primary preform 100 and one end of a silica bar 210, 215 having different properties, such as a supporting silica bar 210, 215 of the glass working lathe support 200, 205 or a second primary preform, which method may be performed easily and rapidly without any risk of breakage.

The present invention proposes a method for welding together one end of the primary preform 100 to one end of the silica bar 210, 215 having different properties, such as a supporting silica bar 210, 215 of the glass working lathe support 200, 205 or a second primary preform, by means of a plasma torch and by projecting silica grain during the operation for heating the end of the preform 100 and of the silica bar 210, 215. A doping gradient then occurs on the respective ends of the primary preform 100 and of the silica bar 210, 215. These ends may then be welded with a minimized risk of breakage as the silica deposited at each welding end is of the same nature.

The invention more particularly proposes a method for welding together one end of a primary preform 100 and one end of a silica bar 210, 215 having different properties, the method comprising the steps of projecting and fusing silica grain under a plasma torch 300 on the end of the primary preform 100 and on the end of the silica bar 210, 215 and bringing into contact the end of the primary preform 100 and the end of the silica bar 210, 215 in order to form a welding area 150 between the end of the primary preform 100 and the end of the silica bar 210,215.

According to an embodiment, the silica bar is a supporting silica bar of a glass working lathe support used for overcladding the primary preform.

According to another embodiment, the silica bar is a second primary preform.

According to an embodiment, the silica grain projected on the end of the primary preform and on the end of the supporting silica bar is natural silica.

According to an embodiment, the step of projecting the silica grain is conducted simultaneously with the step of bringing into contact the end of the primary preform 100 and the end of the silica bar 210, 215.

According to an embodiment a welding area 150 of a few cm³, preferable 1-5 cm³ is formed.

Other features and advantages of the invention will become apparent upon reading the detailed description which follows, of embodiments of the invention given only as an example and with reference to the figures wherein:
Fig. 1 already described, shows a diagram of a known installation for overcladding an optical fiber preform;
Fig. 2 shows a diagram of the weld of a primary preform to a supporting silica bar of a glass working lathe support according to the method of the invention;
Fig. 3 shows a diagram of an installation for overcladding an optical fiber preform according to the invention.

The invention will now be described with reference to an embodiment in which the primary preform must be welded to a supporting silica bar of a glass working lathe support. The explanations provided below however apply to welding a primary preform with any silica bar having properties different from those of the preform, for example the welding of two differently doped primary preforms.

Figs. 2 and 3 show the primary preform 100 and the fixed glass working lathe support 200 with a silica bar 210 held by chucks and adapted to secure the primary preform 100 to be overcladded in order to form a final preform which may be used on a drawing tower.

The primary preform 100 is of high purity silica; it was made according to any known technique, for example by PCVD deposition in a silica tube. The primary preform 100 generally has at least one doped area and often several differently doped annular areas.

The supporting silica bar 210 of the glass working lathe support 200 is adapted in order to secure an end of the primary preform 100 so as to drive it into rotation around its longitudinal axis during the over cladding operation. The other end of the primary preform 100 has already been welded to a supporting silica bar 215 of a glass working lathe support 205. As explained earlier, the silica of the supporting silica bar 210 is often contaminated and is not doped. The difference in materials between the silica of the primary preform 100 and the silica of the supporting silica bar 210 causes different thermal behaviours which complicate welding of the primary preform 100 to the supporting silica bar 210.

The invention proposes projecting and fusing silica grain on each end to be welded, i.e., on the end of the supporting silica bar 210 and on the end to be welded of the primary preform 100. The overcladding installation already in place may be used for performing this projection of silica grain. Indeed, overcladding may be carried out by plasma deposition of silica grain. In a way known *per se,* a conduit for feeding silica grain is provided in proximity to a plasma torch 300.

According to the invention, before proceeding with the overcladding operation along the primary preform, silica grain is projected and fused by the plasma torch 300 on the end of the primary preform 100 to be welded and on the end of the supporting silica bar 210. The projected grain is preferably natural silica grain for reasons of cost but slightly doped silica grain may also be used, for example if the preform is itself highly doped. The projected grain is fused on the end of the heated primary preform 100. The pure silica grain then mixes with the doped silica of the end of the primary preform 100, which is softened because of the heating. A doping gradient 150 in the silica is thereby generated on one end of the primary preform 100 and on the end of the supporting silica bar 210, i.e., on each of the portions to be welded. This doping gradient 150 ensures that the materials to be welded substantially have the same thermal properties. The welding of the primary preform 100 onto the supporting silica bar 210 is therefore performed through this welding area 150 in which a doping gradient was generated, which provides a solid and reliable weld. As discussed before using the method according the prior art, the welded end of the primary preform 100 is lost for fiber drawing because of diffusion of contaminants. In the method according to the present invention, the grain-covered end of the primary preform can also not be used for optical fiber drawing. So the same amount of primary preform 100 cannot be used for fiber drawing, regardless of the welding method applied. Hence, no additional waste of primary preform material is therefore induced by applying the present invention.

In one embodiment of the present invention, first a welding area 150 is formed on the end of the primary preform 100 and on the end of the supporting silica bar 210, 215 and in a second step the welding areas 150 are brought into contact to induce the welding.

In another embodiment of the present invention, welding the primary preform 100 to the supporting silica bar 210 may be performed simultaneously with the generation of the welding area 150. This can for example be brought about by means of a robot which moves primary preform 100 towards the supporting silica bar 210, 215 in order to bring the end of the primary preform 100 closer to the end of the supporting silica bar 210, 215 while at the same time the plasma torch 300 fuses the projected silica grain onto the end of the primary preform 100 and the end of the supporting silica bar 210, 215.

The amount of silica grain projected to form the welding area 150 that is required for form a strong bond between the primary preform 100 and the supporting silica bar 210 is limited and therefore the cost of forming this weld according to the present invention is also limited. The diagrams of Figs. 2 and 3 show relatively large welding areas 150 for illustrative purposes, but an amount of welding area 150 of a few cm³, preferably 1-5 cm³ are sufficient for ensuring proper adhesion of the primary preform 100 to the supporting silica bar 210. For example, for a primary preform 100 with a diameter of 33 mm, an amount of silica grain of about 3 cm³ is sufficient for forming the welding area 150.

After the primary preform 100 has been attached to the glass working lathe support 200, 205 according to the method of the present invention the primary preform may be overcladded using techniques that are known per se, such as by projecting silica grain, which is fused on the surface of the primary preform 100 until the target diameter of the final preform is reached.

Once the overcladding of the primary preform 100 and possible other process steps are finished, the final preform is separated from the supporting silica bar 210, 215 of the glass working lathe support 200, 205 by means of heating the welding area 150 that was formed during the method according to the present invention of welding together the primary preform 100 and the supporting silica bar 210, 215 of the glass working lathe support 200, 205. After heating the welding area 150 the final preform is pulled away from the glass working lathe support 200, 205 at the junction with the welding area 150. This heating and pulling operation generates a cone at the end of the final preform which cone will be used as a starter for the drawing of the optical fiber on a drawing tower.

The method of the present invention is applied with the available overcladding equipment. The plasma torch 300 and the silica grain feeding conduit are available as they are required for overcladding the primary preform 100. Additionally, the step for welding the primary preform 100 to the supporting silica bar 210 of the glass working lathe support 200 may be integrally controlled by a robot dedicated to overcladding operations with a slight change in the control program. Therefore, the welding operation does not require many resources in manpower and the productivity is improved. In addition, the risks of breakage of the primary preform 100 because of bad welding to the supporting silica bar 210, 215 of the glass working lathe support 200, 205 are considerably reduced.

The method of the invention is not limited to the described and illustrated examples and embodiments; the method of the invention notably applies to welding of any silica bars having different compositions, for example different doping concentrations which cause notable viscosity differences.

## Claims

1. A method for welding together one end of a primary preform (100) and one end of a silica bar (210, 215) having different properties, the method comprising the steps of:
projecting and fusing silica grain under a plasma torch (300) on the end of the primary preform (100) and on the end of the silica bar (210, 215); and
bringing Into contact the end of the primary preform (100) and the end of the silica bar (210, 215) In order to form a welding area (150) between the end of the primary preform (10a) and the end of the silica bar (210, 215) and welding said ends by means of said plasma torch (300).

2. The method according to claim 1, wherein the silica bar (210, 215) is a supporting silica bar (210, 215) of a glass working lathe support (200, 205) used for overcladding the primary preform (100).

3. The method according to claim 1, wherein the silica bar (210, 215) is another primary preform.

4. The method according to any of claims 1-3, wherein the silica grain projected on the end of the primary preform (100) and on the end of the supporting silica bar (210, 215) is natural silica.

5. The method according to any of claims 1-4, wherein the end of the primary preform (100) is moved towards the end of the supporting silica bar (210, 215) while at the same time the plasma torch (300) fuses the projected silica grain onto the end of the primary preform (100) and the end of the supporting silica bar (210,215).

6. The method according to any of claims 1-5, wherein a welding area (150) of 1-5 cm³ is formed.

## Patentansprüche

1. Verfahren zum Zusammenschweißen eines Endes eines Primärvorformlings (100) und eines Endes eines Quarzglasstabes (210, 215), die verschiedene Eigenschaften haben, wobei das Verfahren folgende Schritte umfasst:
Quarzglaskörner werden auf das Ende des Primärvorformlings (100) und auf das Ende des Quarzglasstabes (210, 215) aufgetragen und unter einer Plasmaflamme (300) aufgeschmolzen; und
das Ende des Primärvorformlings (100) wird mit dem Ende des Quarzglasstabes (210, 215) in Kontakt gebracht, um eine Schweißzone (150) zwischen dem Ende des Primärvorformlings (100) und dem Ende des Quarzglasstabes (210, 215) zu bilden, und die Enden werden mittels der Plasmaflamme (300) verschweißt.

2. Verfahren nach Anspruch 1, wobei es sich bei dem Quarzglasstab (210, 215) um einen haltenden Quarzglasstab (210, 215) einer Glasbearbeitungs-Drehmaschinenaufnahme (200, 205) handelt, die zum Ummanteln des Primärvorformlings (100) verwendet wird.

3. Verfahren nach Anspruch 1, wobei es sich bei dem Quarzglasstab (210, 215) um einen anderen Primärvorformling handelt.

4. Verfahren nach einem der Ansprüche 1 bis 3, wobei es sich bei den Quarzglaskörnern, die auf das Ende des Primärvorformlings (100) und das Ende des halternden Quarzglasstabes (210, 215) aufgetragen werden, um natürliches Quarzglas handelt.

5. Verfahren nach einem der Ansprüche 1 bis 4, wobei das Ende des Primärvorformlings (100) auf das Ende des halternden Quarzglasstabes (210, 215) zu bewegt wird, während gleichzeitig die Plasmaflamme (300) die aufgetragenen Quarzglaskörner auf das Ende des Primärvorformlings (100) und das Ende des halternden Quarzglasstabes (210, 215) aufschmilzt.

6. Verfahren nach einem der Ansprüche 1 bis 5, wobei eine Schweißzone (150) von 1 bis 5 cm³ gebildet wird.

## Revendications

1. Procédé de soudage l'un à l'autre d'une préforme primaire (100) et d'une extrémité d'une barre de silice (210, 215) ayant des propriétés différentes, le procédé comprenant les étapes consistant à :
projeter et faire fondre des grains de silice sous une torche à plasma (300) sur l'extrémité de la préforme primaire (100) et sur l'extrémité de la barre de silice (210, 215) ; et
mettre en contact l'extrémité de la préforme primaire (100) et l'extrémité de la barre de silice (210, 215) afin de former une zone de soudage (150) entre l'extrémité de la préforme primaire (100) et l'extrémité de la barre de silice (210, 215) et souder lesdites extrémités au moyen de ladite torche à plasma (300).

2. Procédé selon la revendication 1, dans lequel la barre de silice (210, 215) est une barre de silice de support (210, 215) d'un support de tour d'usinage du verre (200, 205) utilisé pour revêtir d'une gaine la préforme primaire (100).

3. Procédé selon la revendication 1, dans lequel la barre de silice (210, 215) est une autre préforme primaire (100).

4. Procédé selon l'une quelconque des revendications 1-3, dans lequel le grain de silice projeté sur l'extrémité de la préforme primaire (100) et sur l'extrémité de la barre de silice de support (210, 215) est de la silice naturelle.

5. Procédé selon l'une quelconque des revendications 1-4, dans lequel l'extrémité de la préforme primaire (100) est déplacée vers l'extrémité de la barre de silice de support (210, 215) pendant qu'en même temps la torche à plasma (300) fait fondre le grain de silice projeté sur l'extrémité de la préforme primaire (100) et l'extrémité de la barre de silice de support (210, 215).

6. Procédé selon l'une quelconque des revendications 1-5, dans lequel une zone de soudage (150) de 1-5 cm³ est formée.
